# EUROPEAN PATENT APPLICATION

(11) **EP 1 505 118 A1**
(43) Date of publication of application: **09.02.2005**
(21) Application number: 04291937.3
(22) Date of filing: 29.07.2004
(51) Int. Cl.: C08L 27/16, C08K 3/04, C09D 127/16, C08K 3/22, H01C 7/02, H05B 3/14, B32B 27/28

(54) **PTC compositions based on PVDF and their applications for self-regulated heating systems**

(30) Priority: 01.08.2003 FR 0309551; 06.10.2003 FR 0311680
(71) Applicant: ARKEMA, 92800 Puteaux (FR)
(72) Inventor: Korzhenko, Alexander, 27800 Saint Victor d'Epine (FR); Caupin, Henri-Jean, 78000 Versailles (FR); Fauque, Romain, 27700 Harquency (FR); Bonnet, Anthony, 27170 Beaumont Le Roger (FR)
(74) Representative: Neel, Henry

(57) **Abstract**

The present invention relates to a PTC composition comprising, by weight, the total being 100%:
A) 40 to 80% of PVDF;
B) 0 to 40% (advantageously 10 to 40%) of an acrylic or styrene polymer;
C) 0 to 40% of an epoxy resin;
D) 0 to 60% of at least one metal oxide;
E) 0 to 25% of a carbonaceous conductive filler
D+E being equal to at least 10%.

To prepare the composition of the invention, the various constituents (A), (B), (E) and optionally (C) and/or (D) are blended in such a way that (A) is in the melt state, then the product obtained is extruded, moulded or injection-moulded or else deposited (for example by extrusion coating) on a substrate. Once the composition has been converted into an article, for example into a sheet or bar, it is provided with at least two electrodes that serve as the power lead-in and return, respectively. The composition may also be placed (for example by moulding, injection-moulding or extrusion coating) between two conducting plates that serve as the power lead-in and return, respectively.

The combination of the article formed from the above composition and the power lead-in and return means is called a "composite". The present invention also relates to heaters comprising the composite described above.

## Description

### [Field of the invention]

The present invention relates to a conductive composition having a temperature-wise self-regulated resistance. It relates more particularly to a blend (or compound) based on PVDF (polyvinylidene fluoride), on an acrylic (PMMA) or styrene (SBS) polymer and optionally on metal oxides and containing a carbonaceous conductive filler.

It is possible to make a polymer material conductive by incorporating graphite. Application of a high enough voltage leads to the material heating up by the Joule effect. In the absence of a circuit breaker mechanism, the temperature increases until the material is destroyed. The composition of the present invention shows an increase in resistance as a function of temperature (Positive Temperature Coefficient or PTC effect) so that the current stabilizes at an equilibrium temperature. This PTC effect therefore allows the intensity of the power to be thermally regulated - this has many advantages compared with conventional resistors.

The conductive composition can be used for many different applications where a self-regulation of the electrical resistance is needed like for instance for self-regulating heaters or in circuit protection devices.
* it can be used as the conductive material of a self-regulating heater. Electrical heating systems are conventionally regulated by including a thermal cut-out in the circuit. Should the latter fail, the circuit or the safety fuse bums out. The PTC material self-regulates without it being necessary to include either a cut-out or a fuse.

### [Prior art and the technical problem]

Patent application **EP 1 205 514** discloses a composite comprising, by weight, the total being 100%:
40 to 90% of PVDF homopolymer or copolymer essentially crystallized in the β form;
10 to 60% of a conductive filler;
0 to 40% of a crystalline or semicrystalline polymer;
0 to 40% of a filler different from the above crystalline or semicrystalline polymer;
and such that the crystals are nucleated in the β form on the surface of the conductive filler particles.

This material is applied as a coating deposited on an insulating substrate such as one made of ceramic, glass, wood, textile fibres, fabrics or any insulating surface. To prepare the coating, all that is required is to disperse the conductive filler in the PVDF, which may be either in the melt or in solution in a suitable solvent such as, for example, acetone or N-methylpyrrolidone. The PVDF containing the conductive filler and optionally the crystalline polymer and the other filler, which is either in the melt or in a solvent, is applied as a paint to the insulating surface. The metal terminals for connection to the electrical circuit may be placed at the ends of the coating before or after application. After cooling the molten polymer or after drying, in order to remove the solvent, the heating element is ready.

As regards the filler other than the crystalline or semicrystalline polymer, the description mentions "....the usual fillers for fluoropolymers, such as silica, PMMA, UV stabilizers, etc.".

It has now been found that PMMA or a styrene polymer is a necessary constituent and that this is not a simple filler in the same way as silica and UV stabilizers. It has also been found that this composition can be prepared by melt-blending the polymer constituents during which the graphite and the optional oxides are added, and that it is unnecessary to use the polymers dissolved in a solvent and then form a suspension by adding the graphite and the optional oxides thereto. In addition, after this composition has been prepared, it is used as such without it being necessary to pass via a solvent phase.

### [Brief description of the invention]

The present invention relates to a PTC composition comprising, by weight, the total being 100%:
A) 40 to 80% of PVDF;
B) 0 to 40% (advantageously 10 to 40%) of an acrylic or styrene polymer;
C) 0 to 40% of an epoxy resin;
D) 0 to 60% of at least one metal oxide;
E) 0 to 25% of a carbonaceous conductive filler;
D+E being equal to at least 10% and advantageously B+C being equal to at least 10%.

The PVDF is responsible for the temperature self-regulation by the PTC effect thanks to its semicrystalline morphology.

### (B) may be a blend of various acrylic and/or styrene polymers.

To prepare the composition of the invention, the various constituents (A), (B), (E) and optionally (C) and/or (D) are blended in such a way that (A) is in the melt state, then the product obtained is extruded, moulded or injection-moulded or else deposited (for example by extrusion coating) on a substrate. Once the composition has been converted into an article, for example into a sheet or bar, it is provided with at least two electrodes that serve as the power lead-in and return, respectively. The composition may also be placed (for example by moulding, injection-moulding or extrusion coating) between two conducting plates that serve as the power lead-in and return, respectively.

The combination of the article formed from the above composition and the power lead-in and return means is called a "composite". The present invention also relates to heaters comprising the composite described above.

### [Detailed description of the invention]

As regards the PVDF, this term denotes both VDF (vinylidene fluoride, sometimes also called VF2) homopolymers and VDF copolymers. The term "VDF copolymers" denotes polymers based on VDF and on at least one other fluorinated monomer. The fluorinated comonomer is advantageously selected from compounds that contain a vinyl group capable of opening in order to be polymerized and that contain, directly attached to this vinyl group, at least one fluorine atom, a fluoroalkyl group or a fluoroalkoxy group.

As examples of comonomers, mention may be made of vinyl fluoride; trifluoroethylene (VF3); chlorotrifluoroethylene (CTFE); 1,2-difluoroethylene; tetra-fluoroethylene (TFE); hexafluoropropylene (HFP); perfluoro(alkyl vinyl) ethers, such as perfluoro(methyl vinyl) ether (PMVE), perfluoro(ethyl vinyl) ether (PEVE) and perfluoro(propyl vinyl) ether (PPVE); perfluoro(1,3-dioxole); perfluoro(2,2-dimethyl-1,3-dioxole) (PDD); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R₁CH₂OCF=CF₂ in which R₁ is hydrogen or F(CF₂)_{z} and z is 1, 2, 3 or 4; the product of formula R₃OCF=CH₂ in which R₃ is F(CF₂)_{z}- and z is 1, 2, 3 or 4; perfluorobutylethylene (PFBE) ; 3,3,3-trifluoropropene and 2-trifluoromethyl-3,3,3-trifluoro-1-propene. Several comonomers may be used.

Mention may be made of VDF/VF3 copolymers containing at least 60, advantageously at least 75 and preferably at least 85 mol% VDF.

Mention may also be made of VDF/TFE/HFP copolymers containing at least 15 mol% TFE units and advantageously VDF/TFE/HFP copolymers having a respective molar composition of 60 to 80/15 to 20/0 to 25 (the total being 100).

Mention may also be made of vinylidene fluoride (VDF) copolymers preferably containing at least 60 wt% VDF, the comonomer being selected from chlorotrifluoroethylene (CTFE), hexafluoropropylene (HFP), trifluoroethylene (VF3) and tetrafluoroethylene (TFE). Advantageously, the proportion of VDF is at least 75% and preferably at least 85%. Among these comonomers, HFP is preferred.

Advantageously the PVDF (A) is selected from PVDF homopolymers and VDF/HFP copolymers containing at least 85 wt% VDF.

The PVDF may be completely or partly modified, that is to say functional groups are introduced thereinto, the purpose of which is to promote bonding between the composition and a substrate or bonding between the electrodes and the composition. Advantageously, the modified PVDF is selected from:
- PVDFs grafted with an unsaturated monomer, the grafting being carried out by irradiation of a blend in the absence of oxygen;
- PVDFs irradiated in the presence of oxygen (these also being referred to as oxidized PVDFs 1); and
- dehydrofluorinated and then oxidized PVDFs (also referred to as oxidized PVDFs 2).

Advantageously, all that is required is to modify one fraction of the PVDF (A) - this fraction may be between 0.5 and 30% of (A) by weight.

The modified PVDFs will now be described. They are prepared from the PVDFs described above.

As regards the grafted PVDFs, these may be prepared by a method of grafting an unsaturated monomer onto the PVDF, in which:
a) the PVDF is melt-blended with the unsaturated monomer;
b) the blend obtained in a) is formed into films, sheets, granules or powder;
c) the products from step b) are subjected, in the absence of air, to photon (γ) or electron (β) irradiation with a dose between 1 and 15 Mrad; and
d) the product obtained at c) is optionally treated in order to remove all or some of the unsaturated monomer that has not been grafted onto the PVDF.

With regard to the unsaturated grafting monomer, mention may be made, by way of examples, of carboxylic acids and their derivatives, acid chlorides, isocyanates, oxazolines, epoxides, amines and hydroxides. Examples of unsaturated carboxylic acids are those having 2 to 20 carbon atoms, such as acrylic, methacrylic, maleic, fumaric and itaconic acids. The functional derivatives of these acids comprise, for example, anhydrides, ester derivatives, amide derivatives, imide derivatives and metal salts (such as alkali metal salts) of unsaturated carboxylic acids. Undecylenic acid may also be mentioned. Unsaturated dicarboxylic acids having 4 to 10 carbon atoms and their functional derivatives, particularly their anhydrides, are particularly preferred grafting monomers. These grafting monomers comprise, for example, maleic, fumaric, itaconic, citraconic, allylsuccinic, cyclohex-4-ene-1,2-dicarboxylic, 4-methylcyclohex-4-ene-1,2-dicarboxylic, bicyclo[2.2.1]hept-5-ene-2,3-dicarboxylic and x-methylbicyclo-[2.2.1]hept-5-ene-2,3-dicarboxylic acids and maleic, itaconic, citraconic, allylsuccinic, cyclohex-4-ene-1,2-dicarboxylic, 4-methylenecyclohex-4-ene-1,2-dicarboxylic, bicyclo-[2.2.1]hept-5-ene-2,3-dicarboxylic and x-methyl-bicyclo[2.2.1]hept-5-ene-2,2-dicarboxylic anhydrides.

Examples of other grafting monomers comprise C₁-C₈ alkyl esters or glycidyl ester derivatives of unsaturated carboxylic acids, such as methyl acrylate, methyl methacrylate, ethyl acrylate, ethyl methacrylate, butyl acrylate, butyl methacrylate, glycidyl acrylate, glycidyl methacrylate, monoethyl maleate, diethyl maleate, monomethyl fumarate, dimethyl fumarate, monomethyl itaconate and diethyl itaconate; amide derivatives of unsaturated carboxylic acids, such as acrylamide, methacrylamide, the monoamide of maleic acid, the diamide of maleic acid, the N-monoethylamide of maleic acid, the N,N-diethylamide of maleic acid, the N-monobutylamide of maleic acid, the N,N-dibutylamide of maleic acid, the monoamide of fumaric acid, the diamide of fumaric acid, the N-monoethylamide of fumaric acid, the N,N-diethylamide of fumaric acid, the N-monobutylamide of fumaric acid and the N,N-dibutylamide of fumaric acid; imide derivatives of unsaturated carboxylic acids, such as maleimide, N-butylmaleimide and N-phenylmaleimide; and metal salts of unsaturated carboxylic acids, such as sodium acrylate, sodium methacrylate, potassium acrylate and potassium methacrylate.

Advantageously, maleic anhydride is used.

Step a) is carried out in any blending device, such as extruders or mixers used in the thermoplastics industry.

With regard to the proportions of the PVDF and of the unsaturated monomer, the proportion of PVDF is advantageously, by weight, from 90 to 99.9% per 0.1 to 10% of unsaturated monomer, respectively. Preferably, the proportion of PVDF is from 95 to 99.9% per 0.1 to 5% of unsaturated monomer, respectively.

After step a), it is found that the blend of the PVDF and the unsaturated monomer has lost about 10 to 50% of the unsaturated monomer that had been introduced at the start of step a). This proportion depends on the volatility and the nature of the unsaturated monomer. In fact, the monomer was vented in the extruder or the blender and it was recovered from the venting circuits.

As regards step c), the products recovered after step b) are advantageously packaged in polyethylene bags, the air is expelled and the bags then sealed. As regards the method of irradiation, it is possible to use, without distinction, electron irradiation, more commonly known as β irradiation, and photon irradiation, more commonly known as γ irradiation. Advantageously, the dose is between 2 and 6 Mrad and preferably between 3 and 5 Mrad.

With regard to step d), the ungrafted monomer may be removed by any means. The proportion of grafted monomer relative to the amount of monomer present at the start of step c) is between 50 and 100%. The product may be washed with solvents that are inert to the PVDF and to the grafted functional groups. For example, when grafting with maleic anhydride, the product may be washed with chlorobenzene. It is also possible, more simply, to vacuum-degas the product recovered at step c).

As regards the oxidized PVDFs 1, these may be prepared by a method of oxidizing the PVDF, in which:
a) the PVDF is formed into films, sheets, granules or powder;
b) the products from step a) are subjected, in the presence of oxygen, to photon (γ) or electron (β) irradiation with a dose of between 1 and 15 Mrad; and
c) the product obtained at b) is optionally treated in order to remove all or some of the by-product impurities.

As regards the irradiation and, firstly, step a), the products are advantageously packaged in polyethylene bags and the bags are not inerted. Advantageously, the PVDF is in the form of powder. The bags may also include an aluminium layer in addition to the polyethylene layer. It is unnecessary to irradiate in the presence of pure oxygen - all that is required is for oxygen to be present. The irradiation may be carried out in the presence of an inert gas containing oxygen. The term "inert gas" denotes a gas that is not involved in the irradiation reaction or in the modification of the fluoropolymer by oxygen. Advantageously, the proportion of oxygen is between 1 and 20% by volume per 99 to 80% of inert gas, respectively. Advantageously, the irradiation is carried out in the presence of air. As regards the irradiation method in step b), it will be possible to use, without distinction, electron irradiation, more commonly known as β irradiation, and photon irradiation, more commonly known as γ irradiation. Advantageously, the dose is between 2 and 12 Mrad and preferably between 2 and 8 Mrad.

As regards step c), the impurities may be removed by any means. The product may be washed with solvents inert to the oxidized PVDF. It is also possible, more simply, to vacuum-degas the product recovered at step b).

As regards the oxidized PVDFs 2, these may be prepared by the process disclosed in Patent EP 1 054 023. This discloses a process for chemically modifying a fluoropolymer, consisting in partially dehydrofluorinating it and then bringing it into contact with an oxidizing agent, especially hydrogen peroxide or a hypochlorite.

With regard to the acrylic or styrene polymer (B), and firstly the acrylic polymer, as examples of acrylic polymer (B), mention may be made of homopolymers of an alkyl (meth)acrylate. Alkyl (meth)acrylates are described in Kirk-Othmer, Encyclopedia of Chemical Technology, 4th edition in Volume 1, pages 292-293 and in Volume 6, pages 475-478. Mention may also be made of copolymers of at least two of these (meth)acrylates and copolymers of at least one (meth)acrylate with at least one monomer selected from acrylonitrile, butadiene, styrene and isoprene, provided that the proportion of (meth)acrylate is at least 50 mol%. Mention may be made of PMMA, and this is described in detail later. These acrylic polymers are either formed from the monomers and optionally from the comonomers mentioned above and do not contain an impact modifier, or they also contain an acrylic impact modifier. Acrylic impact modifiers are, for example, random or block copolymers of at least one monomer selected from styrene, butadiene and isoprene and from at least one monomer selected from acrylonitrile and alkyl (meth)acrylates; they may be of the core/shell type - these core/shell polymers are described later in the section regarding PMMA. These acrylic impact modifiers may be blended with the acrylic polymer (B) once it has been prepared or they may be introduced during the polymerisation of (B), or prepared simultaneously during the polymerization of (B). The MFI (melt flow index) of (B) may be between 2 and 15 g/10 min measured at 230°C under a load of 3.8 kg.

The amount of acrylic impact modifier may, for example, be from 0 to 30 parts per 100 to 70 parts of (B). It would not be outside the scope of the invention if (B) were to be a blend of two or more of the above polymers.

As regards to PMMA, this denotes both methyl methacrylate homopolymers and copolymers containing at least 50 wt% methyl methacrylate. As examples of comonomers, mention may be made, for example, of alkyl (meth)acrylates, acrylonitrile, butadiene, styrene and isoprene. Examples of alkyl (meth)acrylates are described in Kirk-Othmer, Encyclopedia of Chemical Technology, 4th edition in Volume 1, pages 292-293 and in Volume 16, pages 475-478. Advantageously, the PMMA may contain, by weight, 0 to 20% and preferably 5 to 15% of at least one other alkyl (meth)acrylate such as, for example methyl acrylate and/or ethyl acrylate. The PMMA may be functionalized, that is to say it contains, for example, acid, acid chloride, alcohol, anhydride or ureido functional groups. These functional groups may be introduced by grafting or by copolymerization. As regards acid functional groups, these are advantageously an acid functional group provided by the acrylic or methacrylic acid comonomer. Two adjacent acrylic acid functional groups may undergo dehydration to form an anhydride.

The proportion of functional groups may be from 0 to 15% by weight of the PMMA, including the optional functional groups.

The PMMA may contain an acrylic elastomer (or impact modifier). There are in fact commercially available grades of PMMA called "impact grades" that contain acrylic impact modifiers, usually of the core/shell type. These acrylic impact modifiers may also be present in the PMMA because they have been introduced during its polymerization or prepared simultaneously with its polymerization. This proportion of acrylic elastomer may be, by weight, from 0 to 30 parts per 100 to 70 parts of PMMA respectively.

As regards the acrylic elastomer, this denotes elastomers based on at least one monomer selected from acrylonitrile, alkyl (meth)acrylates and core/shell copolymers. As regards the core/shell copolymer, this is in the form of fine particles having an elastomer core and at least one thermoplastic shell, the particle size being generally less than 1 µm and advantageously between 50 and 300 nm. By way of example of the core, mention may be made of isoprene homopolymers or butadiene homopolymers, copolymers of isoprene with at most 30 mol% of a vinyl monomer and copolymers of butadiene with at most 30 mol% of a vinyl monomer. The vinyl monomer may be styrene, an alkylstyrene, acrylonitrile or an alkyl (meth)acrylate. Another core family consists of the homopolymers of an alkyl (meth)acrylate and the copolymers of an alkyl (meth)acrylate with at most 30 mol% of a monomer selected from another alkyl (meth)acrylate and a vinyl monomer. The alkyl (meth)acrylate is advantageously butyl acrylate. The vinyl monomer may be styrene, an alkylstyrene, acrylonitrile, butadiene or isoprene. The core of the core/shell copolymer may be completely or partly crosslinked. All that is required is to add at least difunctional monomers during the preparation of the core; these monomers may be selected from poly(meth)acrylic esters of polyols, such as butylene di(meth)acrylate and trimethylolpropane trimethacrylate. Other difunctional monomers are, for example, divinylbenzene, trivinylbenzene, vinyl acrylate and vinyl methacrylate. The core can also be crosslinked by introducing into it, by grafting or as a comonomer during the polymerization, unsaturated functional monomers such as anhydrides of unsaturated carboxylic acids, unsaturated carboxylic acids and unsaturated epoxides. Mention may be made, by way of example, of maleic anhydride, (meth)acrylic acid and glycidyl methacrylate.

The shell or shells are styrene homopolymers, alkylstyrene homopolymers or methyl methacrylate homopolymers, or copolymers comprising at least 70 mol% of one of the above monomers and at least one comonomer selected from the other above monomers, another alkyl (meth)acrylate, vinyl acetate and acrylonitrile. The shell may be functionalized by introducing into it, by grafting or as a comonomer during the polymerization, unsaturated functional monomers such as anhydrides of unsaturated carboxylic acids, unsaturated carboxylic acids and unsaturated epoxides. Mention may be made, for example, of maleic anhydride, (meth)acrylic acid and glycidyl methacrylate.

By way of example, mention may be made of core/shell copolymers having a polystyrene shell and core/shell copolymers having a PMMA shell. There are also core-shell copolymers having two shells, one made of polystyrene and the other, on the outside, made of PMMA. Examples of copolymers and their method of preparation are described in the following patents: US 4,180,494, US 3,808,180, US 4,096,202, US 4,260,693, US 3,287,443, US 3,657,391, US 4,299,928, US 3,985,704 and US 5,773,520.

Advantageously, the core represents, by weight, 70 to 90% of the core/shell copolymer and the shell represents 30 to 10%.

By way of example of a copolymer, mention may be made of that consisting (i) of 75 to 80 parts of a core comprising at least 93 mol% of butadiene, 5 mol% of styrene and 0.5 to 1 mol% of divinylbenzene and (ii) of 25 to 20 parts of two shells essentially of the same weight, the inner one made of polystyrene and the outer one made of PMMA.

As another example, mention may be made of those having a poly(butyl acrylate) or butyl acrylate/butadiene copolymer core and a PMMA shell.

As another example of an acrylic polymer (B), mention may be made of block copolymers having at least one block formed from PMMA within the meaning of the above PMMA section, that is to say that this block contains at least 50% methyl methacrylate by weight.

Among these polymers, mention may be made of triblock copolymers or triblocks formed from a poly(butyl acrylate) block between two PMMA blocks.

Mention may also be made of S-B-M triblocks in which:
- each block is linked to another by means of a covalent bond or an intermediate molecule linked to one of the blocks via a covalent bond and to the other block via another covalent bond;
- the block M is formed from MMA monomers that are optionally copolymerized with other monomers and comprises at least 50% methyl methacrylate (MMA) by weight;
- the block B is incompatible with the PVDF and with the block M; and
- the block S is incompatible with the block B and the block M, and its T_{g} or its melting point Tₘ is above the T_{g} of B.

As regards the S-B-M triblock, M is formed from methyl methacrylate monomers or contains at least 50 wt% methyl methacrylate, preferably at least 75 wt% methyl methacrylate. The other monomers making up the block M may or may not be acrylic monomers and may or may not be reactive. As non-limiting examples of reactive functional groups mention may be made of the following: oxirane functional groups, amine functional groups and carboxyl functional groups. The reactive monomer may be (meth)acrylic acid or any other hydrolysable monomer leading to these acids. Among other monomers that can form the block M, mention may be made, by way of non-limiting examples, of glycidyl methacrylate and tert-butyl methacrylate. Advantageously, M is formed from at least 60% syndiotactic PMMA.

Advantageously, the T_{g} of B is below 0°C and preferably below -40°C.

The monomer used to synthesize the elastomeric block B may be a diene selected from butadiene, isoprene, 2,3-dimethyl-1,3-butadiene, 1,3-pentadiene and 2-phenyl-1-3-butadiene. Advantageously, B is selected from poly(dienes), especially poly(butadiene), poly(isoprene) and random copolymers thereof, or else from partially or completely hydrogenated poly(dienes). Among polybutadienes, it is advantageous to use those whose T_{g} is the lowest, for example 1,4-polybutadiene having a T_{g} (about -90°C) below that of 1,2-polybutadiene (about 0°C). The blocks B may also be hydrogenated. This hydrogenation is carried out using standard techniques.

The monomer used to synthesize the elastomeric block B may also be one of the following alkyl (meth)acrylates, the T_{g}s of which, given in brackets, follow the name of the (meth)acrylate: ethyl acrylate (-24°C), butyl acrylate (-54°C), 2-ethylhexyl acrylate (-85°C), hydroxyethyl acrylate (-15°C) and 2-ethyhexyl methacrylate (-10°C). It is advantageous to use butyl acrylate. The acrylates are different from those of the block M in order to meet the condition of B and M being incompatible.

Preferably, the blocks B are formed mostly from 1,4-polybutadiene.

The T_{g} or Tₘ of S is advantageously above 23°C and preferably above 50°C. As examples of blocks S, mention may be made of those that derive from vinyl aromatic compounds such as, for example, styrene, α-methylstyrene and vinyltoluene.

Advantageously, the S-B-M triblock is a polystyrene/polybutadiene/PMMA triblock.

The S-B-M triblock has a number-average molar mass that may be between 10 000 g/mol and 500 000 g/mol, preferably between 20 000 and 200 000 g/mol. The S-B-M triblock advantageously has the following composition, expressed as fractions by weight, the total being 100%:
M: between 10 and 80% and preferably between 15 and 70%;
B: between 2 and 80% and preferably between 5 and 70%;
S: between 10 and 88% and preferably between 15 and 85%.

The S-B-M triblocks may be blended with S-B diblocks. As regards the S-B diblocks, the blocks S and B have the same properties as the blocks S and B of the S-B-M triblock, they are incompatible and they are formed from the same monomers and optionally comonomers as the blocks S and the blocks B of the S-B-M triblock. That is to say, the blocks S of the S-B diblock are formed from monomers selected from the same family as the family of monomers available for the blocks S of the S-B-M triblock. Likewise, the blocks B of the S-B diblock are formed from monomers selected from the same family as the family of monomers available for the blocks B of the S-B-M triblock.

The S-B diblock has a number-average molar mass that may be between 10 000 g/mol and 500 000 g/mol, preferably between 20 000 and 200 000 g/mol. Advantageously, the S-B diblock is formed from a mass fraction of B of between 5 and 95% and preferably between 15 and 85%.

The blend of S-B-M triblock and S-B diblock may advantageously be between 5 and 80% S-B diblock per 95 to 20% S-B-M triblock, respectively.

In addition, the advantage of these compositions is that it is unnecessary to purify the S-B-M after it has been synthesized. This is because S-B-M triblocks are generally prepared from S-B diblocks and the reaction often results in an S-B/S-B-M blend that is then separated in order to have the S-B-M triblock.

These S-B-M triblock copolymers may be manufactured by anionic polymerization, for example using the processes described in Patent Applications EP 524 054 and EP 749 987. They may also be manufactured by controlled radical polymerization. These S-B-M triblock copolymers are described in Patent WO 29772.

As regards the styrene polymers (B) of the PTC composition, mention may be made by way of example of linear or star S-B-S block copolymers and optionally these copolymers in hydrogenated form (they are then referred to as S-EB-S block copolymers). S-B-S triblocks are described in Ullman's Encyclopedia of Industrial Chemistry, Volume A 26, pages 655-659.

As examples of S-B-S triblocks, mention may be made of linear triblocks in which each block is linked to another by means of a covalent bond or an intermediate molecule linked to one of the blocks via a covalent bond and to the other block via another covalent bond. The blocks S and B have the same properties as the blocks S and B of the S-B-M triblock, they are incompatible and they are formed from the same monomers and optionally comonomers as the blocks S and the blocks B of the S-B-M triblock. That is to say the blocks S of the S-B-S triblock are formed from monomers selected from the same family as the family of monomers available for the blocks S of the S-B-M triblock. Likewise, the blocks B of the S-B-S triblock are formed from monomers selected from the same family as the family of monomers available for the blocks B of the S-B-M triblock. The blocks S and B may be identical to or different from the other blocks S and B present in the other block copolymers.

The linear S-B-S triblock has a number-average molar mass that may be between 10 000 g/mol and 500 000 g/mol, preferably between 20 000 and 200 000 g/mol. The S-B-S triblock is advantageously formed from a mass fraction of B of between 5 and 95% and preferably between 15 and 85%.

As other examples of S-B-S triblocks, mention may be made of star triblocks. The term "triblock" does not accord with the number of blocks, but the term "S-B-S star triblock" is clear to those skilled in the art. As examples of star triblocks, mention may be made of those of formula: 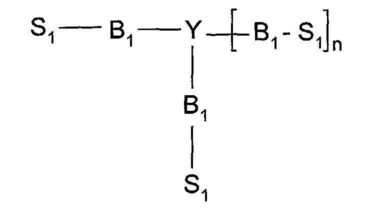 in which n is equal to 1, 2 or 3 and S₁ and B₁ represent blocks. The blocks S₁ represent polymerized styrene and the blocks B₁ polymerized butadiene, polymerized isoprene or a blend of polymerized butadiene and polymerized isoprene. The blocks B₁ may be hydrogenated (the triblock is then referred to as, for example, S-EB-S). Y is a polyfunctional entity coming, for example, from polyfunctional coupling agents that are used in the manufacture of star block copolymers. Such agents and these block copolymers are described in US 3 639 521.

Preferred star block copolymers contain 15 to 45% by weight and better still 25 to 35% styrene units. The molar mass is at least 140 000 and better still at least 160 000.

Particularly preferred star block copolymers are those described in EP 451 920. These copolymers are based on styrene and isoprene, the molar mass of the polystyrene blocks is at least 12 000 and the polystyrene content is at most 35% (by weight) of the total mass of the block copolymer.

The preferred linear block copolymers have a molar mass between 70 000 and 145 000 and contain 12 to 35% polystyrene by weight. Particularly preferred linear block copolymers are those based on styrene and isoprene that are described in European Patent EP 451 919. These copolymers have polystyrene blocks of molar mass between 14 000 and 16 000 and a polystyrene content of between 25 and 35% by weight of the block copolymer. The molar mass is between 80 000 and 145 000 and better still between 100 000 and 145 000.

It is also possible to use a blend of linear S-B-S triblocks and star S-B-S triblocks. These linear or star S-B-S triblocks are commercially available under the brand names FINAPRENE®, FINACLEAR®, KRATON® and STYROLUX®.

As regards the epoxy resin (C), this denotes any organic compound possessing at least two oxirane-type functional groups, that can be polymerized by ring opening. The term "epoxy resins" denotes all the standard epoxy resins that are liquid at room temperature (23°C) or at higher temperature. These epoxy resins may be, on the one hand, monomeric or polymeric and, on the other hand, aliphatic, cycloaliphatic, heterocyclic or aromatic. As examples of such epoxy resins, mention may be made of the diglycidyl ether of resorcinol, the diglycidyl ether of bisphenol A, triglycidyl-p-aminophenol, the diglycidyl ether of bromobisphenol F, the triglycidyl ether of m-aminophenol, tetraglycidyl methylene dianiline, the triglycidyl ether of (trihydroxyphenyl)methane, the polyglycidyl ethers of phenol-formaldehyde novolac resins, the polyglycidyl ethers of ortho-cresol novolac resins and the tetraglycidyl ethers of tetraphenyl ethane. Blends of at least two of these resins may also be used. These epoxy resins may contain a hardener. They may also be photocrosslinkable.

As regards the metal oxide (D), mention may be made by way of example of tin oxides and antimony oxides.

As regards the carbonaceous conductive filler (E), this can be chosen among different types of substantially pure carbon like graphite, carbon black, fullerenes or carbon nanotubes.

The carbon black which can be used in the present invention includes all carbon blacks commonly used for imparting electrical conductivity. This includes, but it is not limited to, acetylene black obtained by the incomplete combustion of acetylene gas, Ketjen black produced by the furnace-type incomplete combustion starting from a crude oil, oil black, naphtalene black, gas black, plasma black, thermal black, lamp black, channel black, roll black and disk black.

Carbon nanotubes could also be used as carbonaceous conductive fillers. They have a structure close to the one of Buckminsterfullerene C60 and a length/diameter ratio comparable to that of long fibres, typically as high as 500 or larger. Reference of WO97/15934 is included herein. The nanotubes can have a diameter from 1 to 70 nm, more preferably about from 10 to 50 nm.

Graphite can be natural or synthetic graphite in the form of flakes.

A single carbonaceous conductive filler can be used although blends of different types of carbonaceous conductive fillers can also be used, for instance carbon black and graphite flakes.

As regards the composite of the invention: to prepare the composition of the invention, the various constituents (A), (B), (E) and optionally (C) and/or (D) are blended in such a way that (A) is in the melt and then the product obtained is extruded, moulded or injection-moulded, or else deposited (for example by extrusion coating) on a substrate. It is possible to use the standard devices for blending and converting thermoplastic polymers, such as mixers, extruders, moulds and presses. It would not be outside the scope of the invention to cool, and store in the form of granules, the product obtained after this blending operation and then subsequently to heat it in order to melt it and then convert it as above. The composition, once converted into an article, for example into a sheet or bar, is provided with at least two electrodes serving as the power lead-in and return, respectively.

The composition may also be placed (for example by moulding, injection-moulding or extrusion coating) between two conducting plates that serve as the power lead-in and return, respectively.

It is also possible to stack several conducting plates each separated by a layer of the PTC composition.

Optionally, an adhesive may be placed between the composition and one or each of the conducting plates. This adhesive is preferably a conductive adhesive. As examples of adhesive, mention may be made of the coextrusion ties that are used in multilayer structures in which PVDF has to be bonded to a material that is incompatible with it, such as for example a polyamide or polyethylene. To do this it suffices to add graphite or carbon black to this coextrusion tie. As adhesive, it is also possible to use a mixture of a fluoropolymer and graphite or carbon black in a solvent and then to allow the solvent to evaporate.

Instead of melt-blending the ingredients into the polymers of the composition, it is possible to dry-blend all the ingredients, preferably in powder form, and then to press and heat the blend in order to convert it into an article or to press it against a conducting plate and then to fix the other conducting plate thereto.

### Applications of the conductive composition

The conductive composition of the invention can be used in different applications, some of them are mentionned below but not in any restrictive way.

### Self-regulating heating

The conductive composition can be used for the preparation of self-regulating heaters. The composition can be dissolved in a suitable solvent to obtain a paint which can be applied on a substrate. The solvent may be selected from acetone, isophorone, dimethylformamide (DMF), methyl ethyl ketone (MEK), N,N-dimethylacetamide and N-methylpyrrolidone (NMP). A person skilled in the art selects the solvent according to the nature of the PVDF, i.e. depending on whether there is a greater or lesser amount of homopolymer. The amount of solvent needed may be from two to five parts by weight per one part of the composition. The substrate may be electrically conducting - and in this case it serves as a current lead-in - and a conducting material is placed on the paint, which material covers the paint completely or partly and allows the current to be returned.

Advantageously, the substrate is electrically insulating; the composition of the invention is deposited on the substrate and then at least one current lead-in means and at least one current return means are added. These means may already be present before spreading the paint. These means may be a copper or aluminium wire or strip, this wire or strip possibly occupying a substantial portion of the surface of the substrate in the manner of a printed circuit used in the electronics industry. In this case, the substrate is an insulating board on which the two - current lead-in and return - electrodes are in the form of a printed circuit and then the PTC composition is deposited on this circuit, on the side with the electrodes. By depositing a PTC paint film with a thickness of 20 to 30 µm on a PET support covered with a copper printed circuit makes it possible to heat to 65°C under a voltage of 13 V, and therefore inter alia to de-ice car rear-view mirrors.

According to another embodiment, the insulating substrate is a honeycomb that is covered with the composition of the invention, for example by dipping it into the solvent containing the said composition (paint) and then by evaporating the solvent. The honeycomb may be in the form of a sheet, a block, a cube or a parallelepiped. Two opposed faces are selected and a conductor is attached to each face, in contact with the paint that covers the honeycomb. It is also possible, instead of fixing a conductor, to cover each face with a silver lacquer. These conductors or this silver lacquer are (is) used for the current lead-in and return. The present invention also relates to the use of these honeycombs for heating a gas, for example air. It is thus possible to heat the passenger compartment of a motor vehicle or the cabin of an aircraft.

According to yet another embodiment, the substrate is a woven glass fabric (glass fibre meshes). The paint is deposited by any means and then the current lead-in and return wires are added, unless they are already contained in the woven glass fabric. Instead of a woven fabric made of glass, it is possible to use any insulator. Meshes impregnated with PTC paints may be used for the following applications: de-icing of industrial floors, de-icing of ship decks, heating of pipelines, heating of aircraft baggage holds, etc.

According to yet another embodiment, the insulating substrate is the outer layer of a hose - this outer layer may be made of rubber or of a thermoplastic (for example a polyamide, polyolefin, etc.). The current lead-in and return wires may be deposited after painting, but preferably they are deposited on the outer layer of the hose. Advantageously, they are in the form of a braid (for example made of polyester or polyamide) containing current lead-in and return wires. The paint is then deposited and this is advantageously followed by a covering with a protective layer. This protective layer may be made of a thermoplastic (provided that it withstands the temperature) or made of rubber. Thus, the invention is a hose comprising, going from the inside to the outside:
- optionally, an inner layer in contact with the fluid transported;
- an outer layer;
- a paint layer according to the invention and electric current lead-in and return means; and
- optionally, a protective layer.

The inside diameter of the hose may have any value and is advantageously between 6 and 50 mm. The thickness of these hoses, that is to say the sum of the thickness of the optional inner layer(s) and the outer layer may be between 1 and 20 mm. These hoses can transport any type of fluid, but they are useful for fluids that crystallize or form blockages at low temperature. Mention may be made, for example, of diesel fuel, for motor vehicles with a diesel engine or for lorries, which often contains waxes that are deposited and cause blockages in winter or in cold countries.

The present invention also relates to heaters comprising the composite described above.

### Circuit protection devices

The conductive composition can be used for the manufacture of circuit protection devices. Those circuits are particularly useful in some electrical applications, e.g. to protect telecommunication circuits, as circuit protection devices in motor vehicles, replacing some or all of the fuses conventionnally used, as over current regulators for appliances and live voltage applications. Reference may be made for example to US2002/0177644A1, US6660795B2, US2004/0136136A1, US2003/0020591A1, US6570483B1, US2002/0161090A1, US6349022B1, US2003/0020591A1, US2004/0006867A1, US2004/0090304A1, US6225610B1, US6300859B1.

### [Examples]

The following products were used:
**PVDF:** this denotes **Kynar® 720** which is a PVDF homopolymer from Atofina having an MVI (melt volume index) of 10 cm³/10 min (230°C/5 kg) or **Kynar**® **721,** which is Kynar 720 in powder form.
**Graphite:** this denotes a graphite of the TIMREX SFG 15 type, produced by Timcal Group. It is a synthetic graphite in the form of flakes and its particle size distribution lies between 0 and 20 µm.
**PMMA:** this denotes a methyl methacrylate/ethyl acrylate copolymer containing 12 wt% ethyl acrylate.
**Maleic anhydride-grafted (or MA-grafted) PVDF or MA-PVDF:** this denotes Kynar® 720, which is a PVDF homopolymer from Atofina and has an MVI (Melt Volume Index) of 10 cm³/10 min (230°C/5 kg) that is radiation-grafted with 1% maleic anhydride.
**Minatec:** this denotes a mixture of tin and antimony oxides.

### Example 1: PVDF/PMMA/graphite

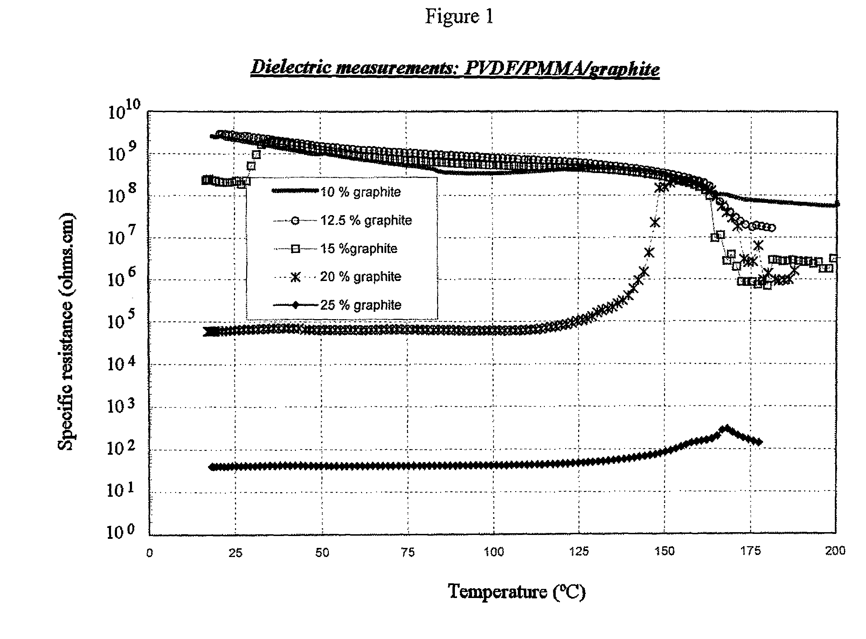

100 g of a PVDF/PMMA blend with a PVDF/PMMA weight ratio of 70/30 was prepared and then 10 to 25 g of graphite were added. This composition was pressed (thickness 1.5 mm) between two aluminium plates. The results are given in Figure 1.

### Example 2: PVDF/PMMA/Minatec/graphite

The addition of a conducting metal oxide greatly improves the conductivity of the material. In addition, this allows good heat dissipation, that graphite does not allow. PVDF, PMMA, Minatec (oxide) and graphite were blended in respective weight proportions of 35/15/40/10.

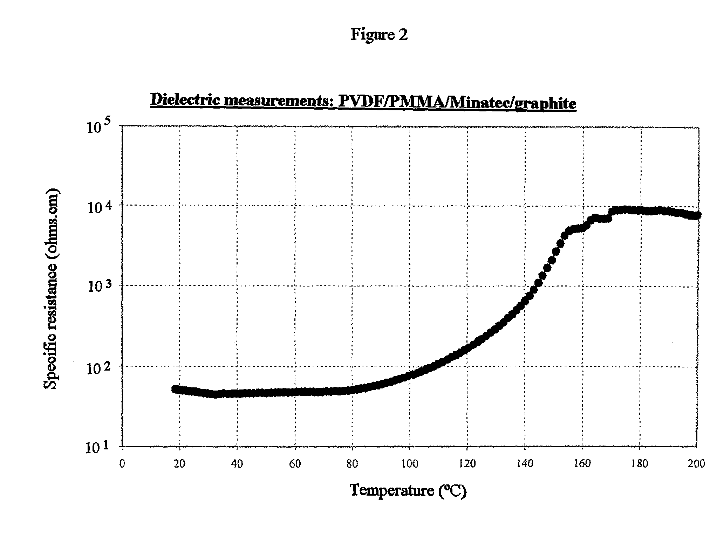

This formulation was compounded by dry blending with direct pressing at 180°C and 150 bar; a 1.5 mm thick plaque was then obtained. The bonding operation was then carried out using a primer in a solvent (methyl ethyl ketone, KynarFlex® and graphite) applied between the faces of the plaque and the aluminium electrodes. KynarFlex® denotes a VDF/HFP copolymer. The results are given in Figure 2.

### Example 3: PVDF/MA-PVDF/PMMA/Minatec/graphite

Because of the intrinsic non-adhesive properties of the PVDF, bonding the electrodes is not easy. Replacing some of the PVDF with maleic anhydride-grafted PVDF gave the composition good adhesive properties. The composition was the same as in Example 2 but, in 100 g of composition, instead of 35 g of PVDF there were 34 g of PVDF and 1 g of MA-grafted PVDF.

The compounding was carried out in the melt, so as to reproduce the injection-moulding or extrusion step, at 230°C in a Brabender mixer. The speed of rotation of the blades was 15 rpm. The residence time was 5 minutes.

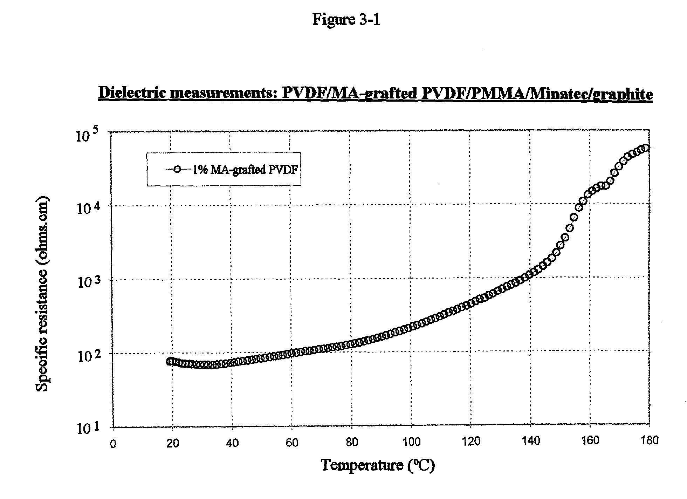

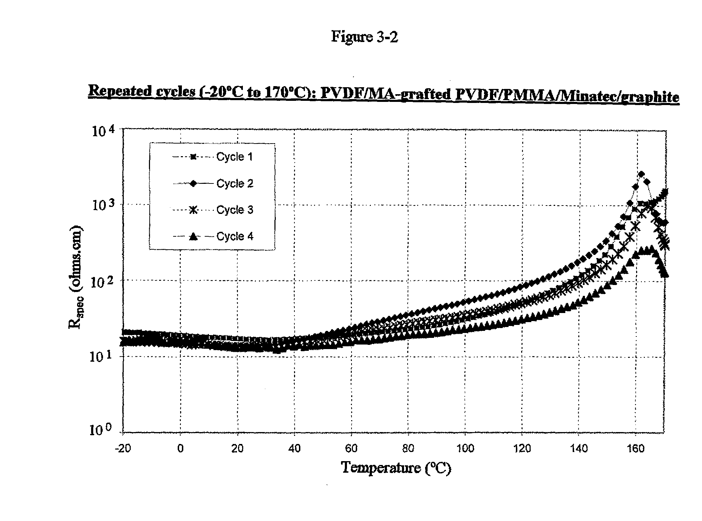

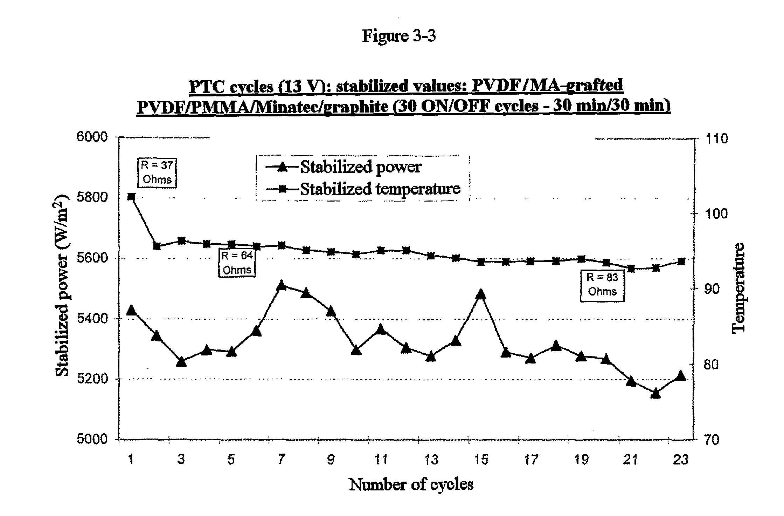

Once the composition had been obtained, the granules were then pressed firstly at 230°C and at 150 bar so as to obtain a plaque, and then the bonding was carried out, also by hot compression moulding (270°C) so as to open the anhydride and form bridges with the aluminium. The crosslinking provided by the addition of MA-grafted PVDF allowed the NTC effect to be reduced. The results are given in Figure 3-1.

When reproducibility tests were carried out, by repeating successive cycles from -20°C to 170°C (Tₘ of the PVDF matrix), it was observed however that the repeatability was not very good and the amplitude of the PTC effect tended to decrease after several cycles. The measurement specimens, which were small squares (2.5 x 2.5 cm) cut from the compression-moulded plaques, showed that the composite underwent substantial flow after each heating cycle; the system therefore lacks high-temperature stability. The results are given in Figure 3-2.

This was explained with simulation cycle tests. The specimens were subjected to a fixed voltage and the change in the temperature and the current were observed. They were subjected alternately to cycles of 30 min under voltage and 30 min at rest. When just the stabilized values of the heating temperature and of the stabilized power were taken before the voltage was cut off, these results, which show a slight and constant reduction in the heating temperature of the material, were obtained. In addition, the resistance of the material when cold greatly changed and the material became less and less conducting. The results are given in Figure 3-3.

### Example 4: PVDF/MA-PVDF/SBM/Minatec/graphite

Replacing the PMMA with SBM triblock copolymer introduces very beneficial behaviour. We made a formulation identical to Example 3, but with the PMMA completely replaced with SBM. The compounding and compression moulding conditions were also the same.

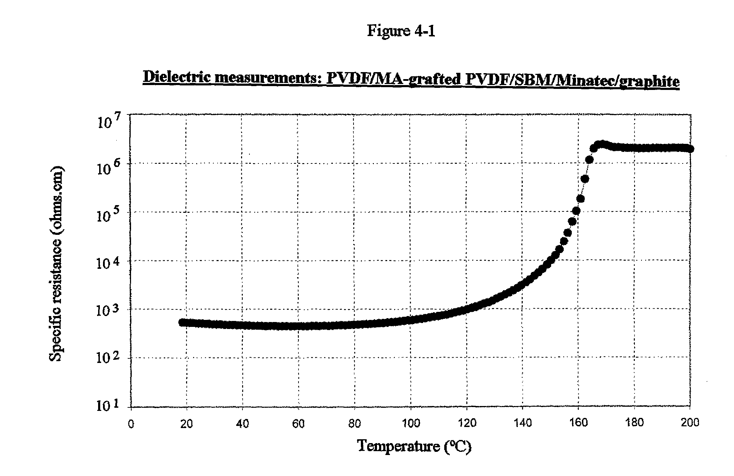

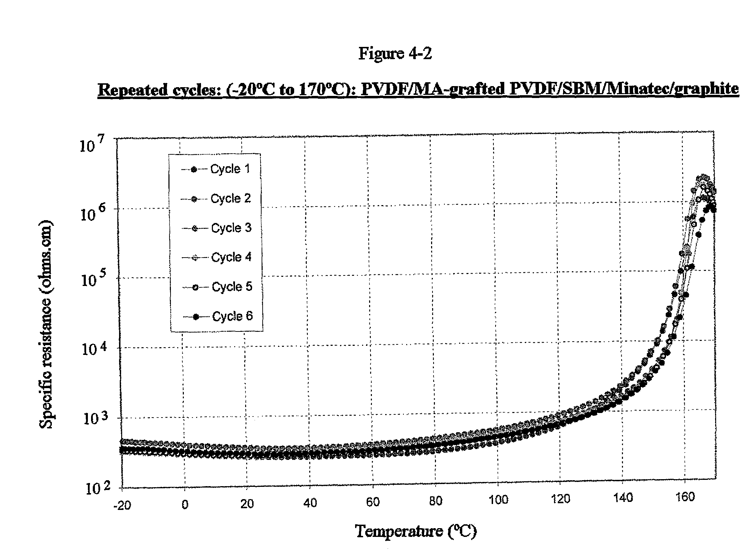

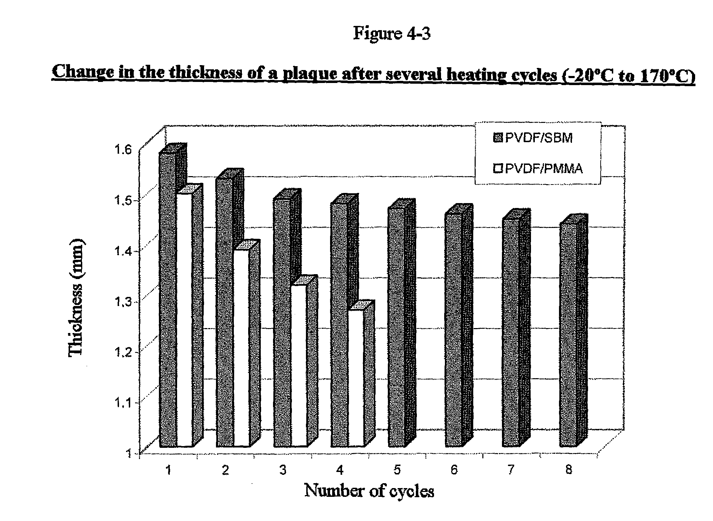

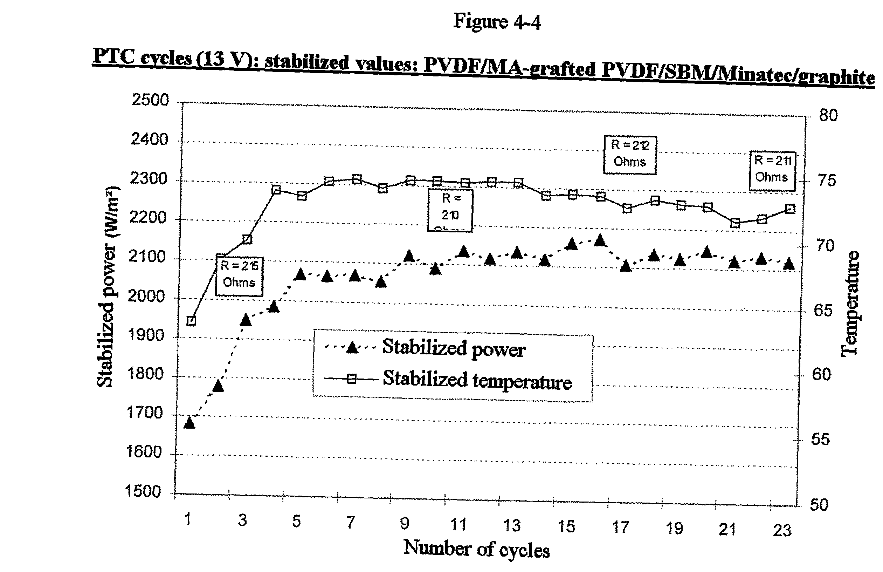

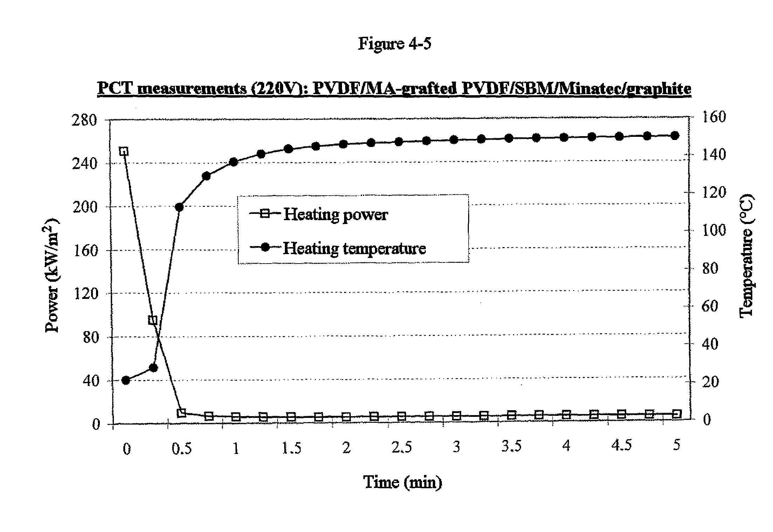

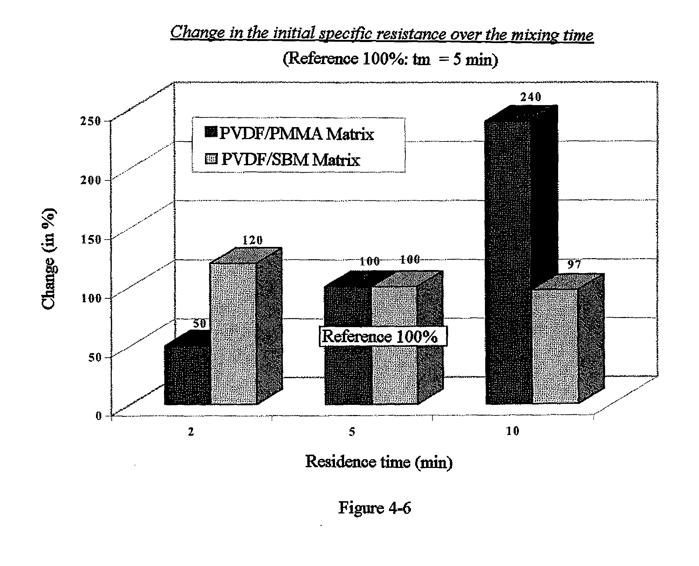

A very good PTC effect was then observed with, however, an increase in the resistance; the part M (PMMA), which is miscible with PVDF, provides the system with cohesion while the part B provides more affinity with the graphite. All this gives the system very great stability at high temperature, with complete cancellation of the NTC effect; a conductivity that platforms out at high temperatures and a material that does not flow and therefore remains intact, even at 200°C, could then be observed. The results are given in Figure 4-1.

This behaviour was confirmed by repeating cycles as in Example 3. In this case, the system was perfectly reversible, even after several cycles, and therefore gave the system excellent thermal stability and very good reproducibility. The results are given in Figure 4-2.

The thermal stability was seen to be very good in the case of repeated heating cycles (from -20°C up to 170°C); the deformation of the plaque composed of SBM (the composition of Example 4) was less than with PMMA (the composition of Example 3), for which only four cycles could be performed; the plaque was then too deformed to continue. The results are given in Figure 4-3.

The reproducibility was also confirmed with voltage tests; the heating temperature, the stabilized power and the cold resistance (between 215 and 210 ohms throughout the test) of the material were markedly more stable than with a PVDF/PMMA base. The results are given in Figure 4-4. A test at 220 V showed the power capability of such a formulation. The results are given in Figure 4-5.

An additional advantage of using SBM is the better stability of the system in the melt:

### • With PMMA (composition of Example 3)

The mean specific resistance depended on the residence time (mixing time):

| | |
|---|---|
| tₘ = 2 min | R_{spec} = 25 ohms.cm |
| tₘ = 5 min | R_{spec} = 50 ohms.cm |
| tₘ = 10 min | R_{spec} = 125 ohms.cm |

### • With SBM (composition of Example 4)

| | |
|---|---|
| tₘ = 2 min | R_{spec} = 720 ohms.cm |
| tₘ = 5 min | R_{spec} = 600 ohms.cm |
| tₘ = 10 min | R_{spec} = 580 ohms.cm. |

These results could be summarized by calculating the changes from the initial specific resistances as a percentage.

With SBM, the specific resistance of the material fluctuated only very little with mixing time and, on the contrary, became even more conducting. This stability is a very important advantage during industrial compounding steps in various mixers, extruders, etc. The results are given in Figure 4-6.

### Example 5: PVDF/MA-PVDF/KMAM/Minatec/graphite

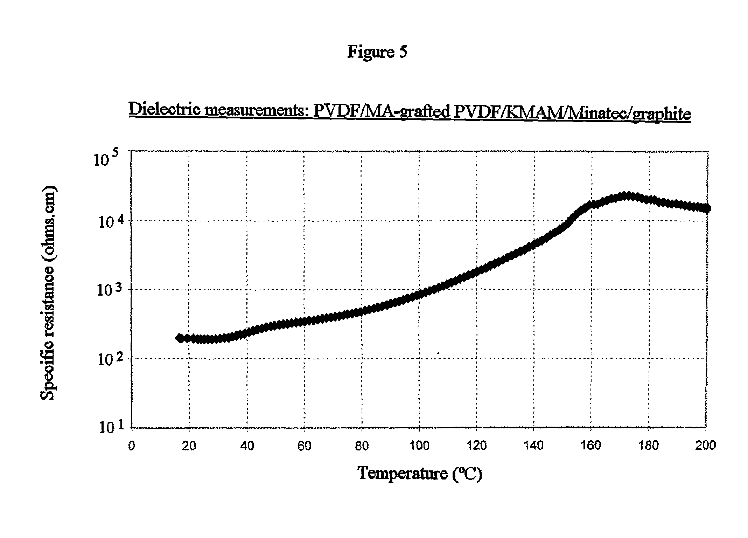

Another test, identical to the previous one, was carried out with another triblock copolymer, denoted by KMAM, PMMA/polybutadiene/PMMA. The results show no appreciable difference compared with SBM. The results are given in Figure 5.

### Example 6: PVDF/MA-PVDF/SBS/Minatec/graphite

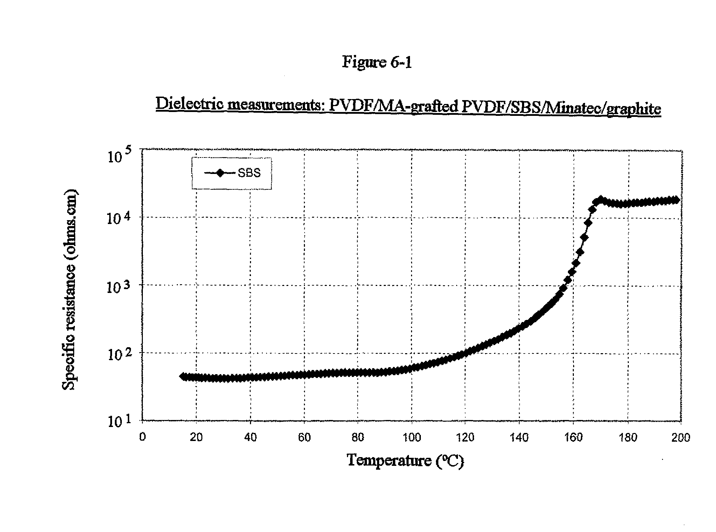

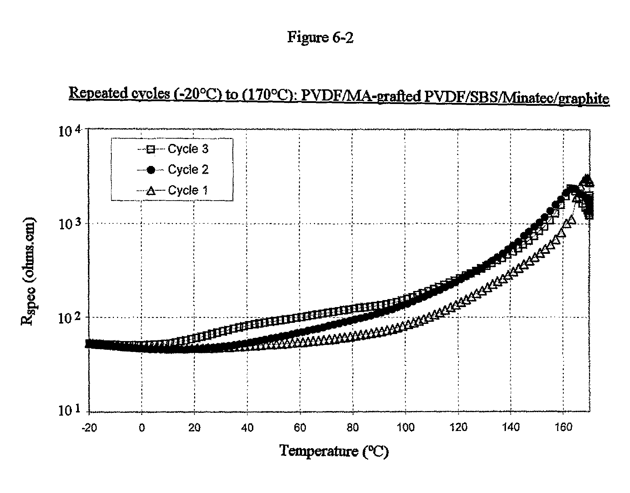

The composition was identical to Example 4 except that the SBM was replaced with an SBS. A first dielectric measurement indicated good PTC behaviour with the same hot thermal stability. The results are given in Figure 6-1.

On the other hand, repeated cycles show a lack of reproducibility and clearly confirm the benefit of using SBM with the part M miscible with the PVDF. The results are given in Figure 6-2.

### Example 7: PVDF/MA-PVDF/epoxy/Minatec/graphite

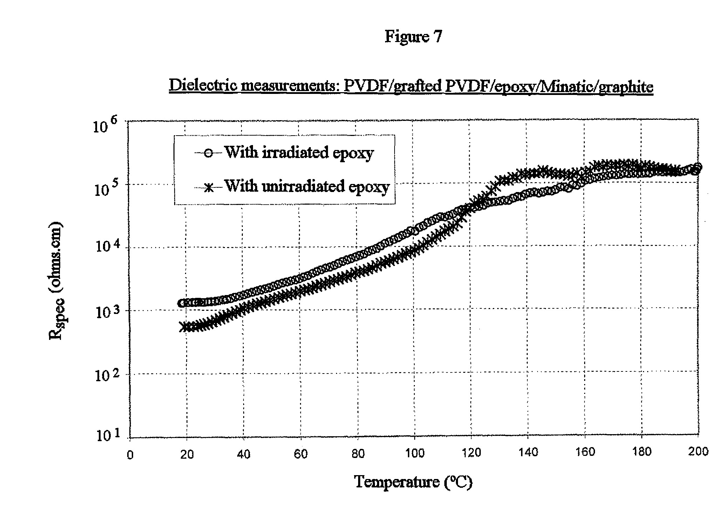

This test was carried out by substituting, in the composition of Example 3, the PMMA with a photocrosslinkable cycloaliphatic epoxy. Before and after irradiation, the material retained its PTC properties, but the main advantage is that this provides the system with substantial fluidization. This may be very beneficial in the case of conversion by injection-moulding, for which it is necessary to have quite a high MFI. The results are given in Figure 7.

### Example 8

The same composite as that of Example 4 may be used for heating? shoes. A plate 1.5 mm in thickness with an aluminium foil on each side may be incorporated into the sole of shoe near the toes. The specific resistance of the PTC composite must be optimized according to the area available for heating to the power required and to the surface temperature. The specific resistance of the material may be modified by the graphite concentration.
An example for heating a shoe with 5 W of power at 3.6 V is given in the table below.

| Specific power (W/cm²) | Heating area needed to achieve 5 W/cm² | Maximum surface temperature of the plate (°C) | Specific resistivity of the material (ohms. cm) | Comment |
|---|---|---|---|---|
| 0.1 | 50 | 35 | 864 | Area is too large |
| 0.2 | 25 | 50 | 432 | Optimum region |
| 0.3 | 16 | 65 | 264 | |
| 0.5 | 12.5 | 85 | 216 | Temperature too high |

## Claims

1. PTC composition comprising, by weight, the total being 100%:
A) 40 to 80% of PVDF;
B) 0 to 40% (advantageously 10 to 40%) of an acrylic or styrene polymer;
C) 0 to 40% of an epoxy resin;
D) 0 to 60% of at least one metal oxide;
E) 0 to 25% of a carbonaceous conductive filler;
D+E being equal to at least 10% and advantageously B+C being equal to at least 10%.

2. Composition according to Claim 1, in which the PVDF is selected from VDF/TFE/HFP copolymers having a respective molar composition of 60 to 80/15 to 20/0 to 25 (the total being 100).

3. Composition according to Claim 1, in which the PVDF is selected from vinylidene fluoride (VDF) copolymers containing at least 60 wt% VDF, the comonomer being selected from chlorotrifluoroethylene (CTFE), hexafluoropropylene (HFP), trifluoroethylene (VF3) and tetrafluoroethylene (TFE).

4. Composition according to Claim 3, in which the PVDF (A) is selected from PVDF homopolymers and VDF/HFP copolymers containing at least 85 wt% VDF.

5. Composition according to Claim 1, in which the carbonaceous conductive filler is graphite, carbon black, fullerenes or carbon nanotubes.

6. Composition according to any one of the preceding claims, in which the PVDF is completely or partly modified and is selected from:
- PVDFs grafted with an unsaturated monomer, the grafting being carried out by irradiation of a blend in the absence of oxygen;
- PVDFs irradiated in the presence of oxygen; and
- dehydrofluorinated and then oxidized PVDFs.

7. Composition according to Claim 6, in which the modified PVDF represents between 0.5 and 30% of (A) by weight.

8. Composition according to any one of the preceding claims, in which (B) is PMMA.

9. Composition according to any one of Claims 1 to 7, in which (B) is a block copolymer having at least one block containing at least 50% methyl methacrylate by weight.

10. Composition according to Claim 9, in which (B) is a triblock formed from a poly(butylacrylate) block between two PMMA blocks.

11. Composition according to Claim 9, in which (B) is selected from S-B-M triblocks in which:
- each block is linked to another by means of a covalent bond or an intermediate molecule linked to one of the blocks via a covalent bond and to the other block via another covalent bond;
- the block M is formed from MMA monomers that are optionally copolymerized with other monomers and comprises at least 50% methyl methacrylate (MMA) by weight;
- the block B is incompatible with the PVDF and with the block M; and
- the block S is incompatible with the block B and the block M, and its T_{g} or its melting point Tₘ is above the T_{g} of B.

12. Composition according to Claim 11, in which the block B of the S-B-M triblock is made of polybutadiene.

13. Composition according to Claim 11 or 12, in which the block S of the S-B-M triblock is made of polystyrene.

14. Composition according to any one of Claims 1 to 7, in which (B) is an S-B-S triblock copolymer.

15. Composite comprising the composition according to any one of the preceding claims, placed between two conducting plates.

16. Composite comprising the composition according to any one of Claims 1 to 14.

17. Composite comprising a substrate completely or partly covered with the composition according to any of Claims 1 to 14.

18. Composite according to Claim 17, in which the substrate is a honeycomb formed from an insulator.

19. Use of the material of Claim 18 to heat a gas.

20. Use according to Claim 19 in which the passenger compartments of motor vehicles or the cabins of aircraft are heated.

21. Heater comprising the composite according to either Claims 15 and 18.

22. Circuit protection device comprising the composition according to any one of Claims 1 to 14.

23. Composite which is a hose comprising, going from the inside to the outside:
- optionally, an inner layer in contact with the fluid transported;
- an outer layer;
- a paint layer according to any one of Claims 1 to 14 and electric current lead-in and return means; and
- optionally, a protective layer.
